# EUROPÄISCHE PATENTSCHRIFT

(11) **EP 0 417 552 B1**
(45) Veröffentlichungstag und Bekanntmachung des Hinweises auf die Patenterteilung: **26.10.1994**
(21) Anmeldenummer: 90116601.7
(22) Anmeldetag: 30.08.1990
(51) Int. Cl.: B29C 71/04, C08J 7/00, B29K 23/00

(54) **Verfahren zur Stabilisierung von Halbzeugen oder Fertigteilen aus polymeren Werkstoffen**
Method for stabilizing semi-finished or finished polymeric articles
Procédé pour stabiliser des objets semi-finis ou finis en matière polymère

(30) Priorität: 14.09.1989 DE 3930753
(43) Veröffentlichungstag der Anmeldung: 20.03.1991
(73) Patentinhaber: REHAU AG + Co, 95111 Rehau (DE)
(72) Erfinder:

(56) Entgegenhaltungen:
- DE-A- 2 654 931
- DE-A- 2 911 777
- DE-A- 3 844 232
- US-A- 2 785 313
- US-A- 4 401 536
- WORLD PATENTS INDEX LATEST Section Ch, Week 8136, Derwent Publications Ltd., London, GB; Class A, AN 81-65080D & JP-A-56 089 934 (BRIDGESTONE TIRE) 21. Juli 1981
- WORLD PATENTS INDEX Section Ch, Week 7637, Derwent Publications Ltd., London, GB; Class A, AN 76-69538 & JP-A-51 086 550 (UBE INDUSTRIES) 30. Juli 1976
- WORLD PATENTS INDEX Section Ch, Week 7822, Derwent Publications Ltd., London, GB; Class A, AN 78-39593A & JP-A-53 044 892 (SUMITOMO ELEC IND) 22. April 1978
- WORLD PATENTS INDEX Section Ch, Week 7832, Derwent Publications Ltd., London, GB; Class A, AN 78-57571A & JP-A-53 075 278 (ASAHI DOW) 4. Juli 1978
- WORLD PATENTS INDEX Section Ch, Week 7832, Derwent Publications Ltd., London, GB; Class A, AN 78-57756A & JP-A-53 076 386 (SUMITOMO ELEC IND) 6. Juli 1978
- WORLD PATENTS INDEX LATEST Week 8519, Derwent Publications Ltd., London, GB; AN 85-114224 & JP-A-60 056 536 (SUMITOMO CHEMICAL) 2. April 1985

## Beschreibung

Die Erfindung betrifft ein Verfahren zur Stabilisierung von vorgefertigten Halbzeugen oder Fertigteilen aus einem ungesättigten Polymeren oder einer Polymerlegierung, die wenigstens ein ungesättigtes Polymeres enthält, wobei die Teile zur Vernetzung und/oder Sterilisation einer energiereichen Strahlung ausgesetzt werden.

Die Verwendung von energiereicher Strahlung zur Vernetzung von körperlichen Gegenständen aus polymeren Werkstoffen ist bekannt. Es wird hierzu verwiesen auf die DE-OS 29 11 777. Dort ist ein Verfahren zur Herstellung von Profilen aus vernetzten Polymerisaten beschrieben, die eine Dichte von 0,930 bis 0,945 g/cm³ und einen Schmelzindex von 1,5 - 10 g/10 Min. aufweisen. Die Vernetzung wird in diesem Fall mit Elektronenstranlen einer Energie von 0,5 - 3,0 × 10⁶ Elektronenvolt in einer Dosis von bis zu 300 kGy bestrahlt werden.

Die derart behandelten Formkörper weisen verbesserte mechanische Eigenschaften durch die Vernetzung des Polymerisates auf.

Der Nachteil des bekannten Verfahrens ist die Höhe der Bestrahlungsdosis. Bei solchen Dosen können elektrische Durchschläge auftreten, die zu Fehlstellen und Löchern im Formkörper führen können.

Aus der DE-OS 27 57 820 ist es bekannt, diese Nachteile zu vermeiden, indem im Ausgangspolymerisat vor der Verformung aromatische sekundäre Aminverbindungen zusammen mit einer als Vernetzungsmittel wirkenden acethylenischen Verbindung zugesetzt werden.

Diese Zuschlagstoffe beschränken die Einsatzmöglichkeiten damit hergestellter Formkörper, die beispielsweise für den medizinischen Bereich oder die Lebensmittelindustrie nicht einsetzbar sind.

Für diese Bereiche findet bisher Polyvinylchlorid weitgehende Verwendung. Die Nachteile dieses Polymers sind jedoch bei der Verwendung von weich eingestelltem Polyvinylchlorid die Weichmachermigration, die begrenzte Elastizität, die Probleme bei der Sterilisation und insbesondere die bei der Entsorgung auftretende Problematik. So sind Formkörper aus Polyvinylchlorid nur bedingt heißdampfsterilisierbar. Formkörper aus Polyvinylchlorid ohne entsprechende Zuschlagstoffe werden bei der Strahlensterilisation geschädigt. Dieser Nachteil kann nur dadurch behoben werden, daß das zur Herstellung der Formkörper verwendete Polyvinylchlorid in unzulässiger Weise stark stabilisiert wird. Derartige Stabilisatoren sind aber gerade im medizinischen und lebensmitteltechnischen Bereich nicht zulässig.

Die aus der DE-OS 29 11 777 bekannten Ethylenpolymerisate, die als Alternative für PVC vorgeschlagen werden, sind jedoch gleichermaßen träge und knickempfindlich. Auch lassen sich Formkörper aus Ethylen-Vinyl-Acetat nicht der harmlosen Heißdampfsterilisation unterziehen und die Sterilisation mit energiereichen Elektronenstrahlen führt zur Abspaltung von Essigsäure. Durch die Bestrahlung mit energiereichen Strahlen kann der Formkörper aus Ethylen-Vinyl-Acetat zwar heißdampfsterilisierbar gemacht werden, jedoch entsteht als unerwünschtes Nebenprodukt die genannte Essigsäure.

Wie Ethylen-Vinyl-Acetat lassen sich auch Verschnitte von Polybutadienen mit Styrolblock-Copolymeren vernetzen und damit unempfindlicher gegenüber höheren Temperaturen machen. Hierbei werden Vernetzungsmittel auf Schwefelbasis eingesetzt. Derartige Rezepturen sind jedoch aufgrund des Vernetzergehaltes für den medizinischen und Lebensmittelbereich nicht verwendbar.

Demgegenüber hat sich die Erfindung die Aufgabe gestellt, die Vorteile des Polybutadiens für die Herstellung von Profilen und Formkörpern für den medizinischen und Lebensmittelbereich nutzbar zu machen. Insbesondere sollten bei der Verarbeitung schädliche Vernetzungsmittel ausgeschlossen und durch die Anwendung der energiereichen Strahlen neben der Möglichkeit der Sterilisation der für die Einsatzzwecke erforderliche Vernetzungsgrad der Profile und Formkörper herbeigeführt werden. Dazu wird vorgeschlagen, daß als polymerer Werkstoff ein ungesättigtes 1,2 Polybutadien bei einer kristallinität von 15% bis 29% verwendet wird, welcher einer Bestrahlungsdosis von maximal 80 kG ausgesetzt wird.

Vorteilhaft wird die Bestrahlungsdosis je nach dem Kristallisationsgrad der syndiotaktischen 1,2-Polybutadiene zwischen 20 und 60 kGy variiert.

Die Erfindung beschäftigt sich mit der Vernetzung von 1,2 Polybutadienen mit energiereicher Strahlung ohne die Verwendung von im medizinischen und Lebensmittelbereich nicht zulässigen Vernetzern. Gleichzeitig kann mit dieser Vernetzung die Sterilisation der Formkörper oder Profile vorgenommen werden.

Polybutadiene besitzen von Natur aus eine gute Elastizität, Knickbeständigkeit, Transparenz, Lösungsmittelbeständigkeit und Hydrolysebeständigkeit. Die Materialien sind frei von Stabilisatoren, physiologisch unbedenklich und lassen sich ohne Probleme entsorgen.

Der Nachteil der 1,2-Polybutadiene liegt in der mangelnden Temperaturbeständigkeit, die eine breite Anwendung im medizinischen und Lebensmittel bereich nicht zuläßt.

Dieser Nachteil läßt sich jedoch beheben, wenn die hergestellten Profile oder Formteile durch Vernetzung in einen thermoelastischen Zustand überführt werden. Während die chemische Vernetzung, z.B. durch Peroxide zu Spalt- und Zersetzungsprodukten führt, die einen medizinischen Einsatz nicht zulassen, ergibt die physikalische Vernetzung durch energiereiche Strahlung ein hervorragend geeignetes Produkt. Zur Anwendung kommen dabei Elektronen- oder Gammastrahlen, die auch zur Sterilisation medizinischer Artikel eingesetzt werden können.

Hierbei hat sich als wesentlich herausgestellt, daß die 1,2-Polybutadiene bereits bei einer sehr niedrigen Bestrahlungsdosis eine ausreichende Vernetzungshöhe zeigen. Erfindungsgemäß wird hierbei herausgestellt, daß eine Bestrahlungsdosis zwischen 20 und 60 kGy vollkommen ausreicht, um die Formkörper oder Profile temperaturbeständig und damit heißdampfsterilisierbar zu machen. Der besondere Vorteil wird darin gesehen, daß dadurch eine Mehrfachsterilisation und damit Mehrfachverwendung solcher Formkörper oder Profile möglich wird. Der große Vorteil wird darin gesehen, daß die zur Vernetzung erforderliche geringe Bestrahlungsdosis von 20-60 kGy gleichzeitig die Dosis ist, die auch für die Sterilisation solcher Formkörper bzw. Profile verwendet werden kann.

Die Vernetzung mit dieser geringen Bestrahlungsdosis bringt eine derartige Verbesserung der physikalischen Eigenschaften einschließlich der Temperaturstabilität der Formteile oder Profile, daß diese nunmehr einfacher und mehrfacher Heißdampfsterilisationen zugeführt werden können.

Das für die Erfindung verwendete 1,2-Polybutadien läßt sich so einsetzen, daß die mit diesem Material hergestellten Profile oder Formteile auch im unvernetzten Zustand verwendbar sind. Dies bedeutet, daß aus dem genannten Polymeren Formkörper oder Profile gefertigt werden können, die in dieser Fertigungsform bereits konfektioniert und beispielsweise verpackt werden können.

Mit dieser Einwirkung der energiereichen Strahlen und mit der Vernetzung werden die Formkörper bzw. Profile gleichzeitig in einen temperaturbeständigen Zustand überführt. Darüber hinaus werden auch solche Materialeigenschaften wie Rückstellvermögen und Knickbeständigkeit wesentlich verbessert.

Durch die erfindungsgemäß verwendete sehr niedrige Bestrahlungsdosis wird ein Vernetzungsgrad von über 50 % erreicht. Diese leichte Vernetzbarkeit gründet in der Molekülstruktur des 1,2-Polybutadiens. Dieses Polymer weist eine seitenständige und damit sehr reaktive Vinylfunktion auf, die die Bildung von Vernetzungsstellen begünstigt. Dieser Vorteil wird z.B. bei Polyethylen erst durch den Zusatz ungesättigter, mehrfunktioneller monomerer Verbindungen erreicht, die jedoch zum Auswandern neigen und daher in ihrer Wirksamkeit beschränkt sind.

Der Erfindung zugrunde liegen 1,2-Polybutadiene mit Kristallisationsgraden von ca. 15, 25 und 29 %. Die physikalischen Werte dieser vernetzten 1,2-Polybutadiene sind entsprechend der gewählten Kristallisationsgrade in der nachfolgenden Tabelle aufgezeichnet:

| Bestrahlungsdosis | 20 | 40 | 60 | 80 | kGy |
|---|---|---|---|---|---|
| Kristallinität 15 % | | | | | |
| Reißfestigkeit | 15,3 | 19,4 | 19,1 | 16,7 | MPa |
| Reißdehnung | 610 | 555 | 473 | 383 | % |
| Vernetzungsgrad | 48 | 75 | 84 | 90 | % |
| Wärmedehnung | (260)* | (105)* | 60 | 40 | % |
| Rückstellvermögen | 69 | 88 | 97 | 95 | % |

| Kristallinität 25 % | | | | | |
|---|---|---|---|---|---|
| Reißfestigkeit | 22,1 | 24,1 | 24,3 | 22,3 | MPa |
| Reißdehnung | 572 | 497 | 430 | 352 | % |
| Vernetzungsgrad | 48 | 75 | 85 | 90 | % |
| Wärmedehnung | (285)* | 115 | 60 | 35 | % |
| Rückstellvermögen | 60 | 83 | 94 | 93 | % |

| Kristallinität 29 % | | | | | |
|---|---|---|---|---|---|
| Reißfestigkeit | 23,2 | 28,0 | 26,9 | 23,5 | MPa |
| Reißdehnung | 540 | 450 | 395 | 317 | % |
| Vernetzungsgrad | 61 | 82 | 90 | 93 | % |
| Wärmedehnung | (311)* | 110 | 50 | 30 | % |
| Rückstellvermögen | 54 | 76 | 87 | 91 | % |

| | | | | | |
|---|---|---|---|---|---|
| ( )* Abriß des Materials | | | | | |

Versuche haben gezeigt, daß die Wärmedehnung bei 130° C über 30 Minuten unter einer Anhängelast von 223 g bei dem Versuchskörper mit dem Kristallisationsgrad 15 % bei einer Strahlendosis von 20 und 40 kGy zum Reißen des Versuchskörpers geführt haben. Zwischen 40 und 60 kGy wird das Material des Versuchskörpers hitzebeständig, während Versuchskörper mit 25 und 29 % Kristallisationsgrad bereits nach einer Strahlendosis von 40 kGy hitzebeständig, d.h. für die Heißdampfsterilisation geeignet werden. Bei dieser Heißdampfsterilisation werden 121° C über 30 Minuten angewendet.

Aus den Tabellen ergibt sich, daß die optimale Reißfestigkeit bei jeweils ca 40 kGy erreicht wird, während bei einer Dosis über 60 kGy bereits die Molekülkette geschädigt wird.

Das Rückstellvermögen eines über eine Stunde bei 130° C auf annähernd die doppelte Wanddicke zusammengedrückt gehaltenen Schlauches ist bei einer Dosis von 40-60 kGy als gut bis sehr gut zu bezeichnen. Bei dem Material mit dem Kristallisationsgrad von 29 % ist dieses Rückstellvermögen erwartungsgemäß geringfügig schlechter. Das gute Rückstellvermögen und die verbesserte Knickbeständigdkeit bieten beispielsweise bei Infusionsschläuchen unter Verwendung der üblichen Rollenklemmen eine gegenüber PVC-Schläuchen deutlich verbesserte Dosiergenauigkeit.

Das wichtigste Kriterium für die erfindungsgemäße Stahlendosis ist jedoch die verbesserte Temperaturbeständigkeit, um diese von Natur aus für den medizinischen und Lebensmittelbereich einsetzbaren Polybutadiene heißdampfsterilisierbar zu machen.

Das erfindungsgemäß behandelte Material ist geeignet zur Herstellung von Schläuchen, die für peristaltische und Rollerpumpen geeignet erscheinen. In Verbindung mit sogenannten Regulierklemmen, wie sie für die Veränderung des Strömungsquerschnittes bei Infusionssystemen üblich sind, wird bei Infusionsschläuchen aus vernetzten Polybutadienen der Kalte Fluß, der zu einer Änderung des Strömungsquerschnittes während der Applikation führt, ausgeschlossen. Schläuche aus erfindungsgemäß vernetzten Polybutadienen bieten sich an für die Herstellung von Angiographie-Kathetern. Diese Schläuche besitzen die notwendige Druckbeständigkeit und nach der thermischen Formgebung kann diese Form durch die Vernetzung eingefroren werden. Dadurch läßt sich gegenüber den bisher eingesetzten Materialien Polyethylen und Polyurethan ein verbesserter Memory-Effekt erzielen und die Reißfestigkeit wird gegenüber den genannten Materialien deutlich verbessert.

## Patentansprüche

1. Verwendung einer energiereichen Strahlung zur Vernetzung von vorgefertigten Halbzeugen oder Fertigteilen aus einem ungesättigten Polymeren oder einer Polymerlegierung, die wenigstens ein ungesättigtes Polymer enthält, wobei das ungesättigte Polymer ein 1,2-Polybutadien ist und wobei die Halbzeuge oder Fertigteile bei einer Kristallinität von 15% bis 29% einer Strahlendosis von maximal 80 kGy ausgesetzt werden, zur Herstellung von Profilen und Formkörpern für die Medizintechnik und den Lebensmittelbereich.

2. Verwendung nach Anspruch 1, dadurch gekennzeichnet, daß die Bestrahlung nach der thermischen Formgebung erfolgt.

3. Verwendung nach Anspruch 1, dadurch gekennzeichnet, daß die Bestrahlungsdosis in Abhängigkeit vom Kristallisationsgrad des 1,2-Polybutadiens zwischen 20 und 60 kGy liegt.

## Claims

1. Application of high-energy radiation to crosslink prefabricated semi-finished products or finished articles made from an unsaturated polymer or polymer alloy containing at least one unsaturated polymer whereby the unsaturated polymer is a 1,2-polybutadiene and whereby the semi-finished products or finished articles, having a crystallinity of 15% to 29%, are exposed to a maximum radiation dose of 80 kGy for the manufacture of profiles and moulded objects for the medical and foodstuff sectors.

2. Application as described in claim 1, characterised by the fact that irradiation takes place after the thermoforming process.

3. Application as described in claim 1, characterised by the fact that the radiation dose lies between 20 and 60 kGy and is governed by the degree of crystallinity of the 1,2-polybutadiene.

## Revendications

1. Utilisation d'un rayonnement riche en énergie pour la réticulation de produits semi-finis préfabriqués ou de pièces finies en un polymère non saturé ou en un alliage de polymères qui contient au moins un polymère non saturé, le polymère non saturé étant un polybutadiène 1,2 et les produits semi-finis ou les pièces finies étant exposés à un débit d'exposition de 80 kGy au maximum, à une cristallinité de 15% à 29%, pour la fabrication de profilés et de corps moulés pour la technique médicale et la branche des produits alimentaires.

2. Utilisation selon la revendication 1, caractérisée en ce que le rayonnement est effectué après le façonnage thermique.

3. Utilisation selon la revendication 1, caractérisée en ce que le débit d'exposition se trouve entre 20 et 60 kGy en fonction du degré de cristallisation du polybutadiène 1,2.
